Europäisches Patentamt

**European Patent Office**

**Office européen des brevets**

(11) Publication number: **0 145 222**
**A1**

(12) **EUROPEAN PATENT APPLICATION**

(21) Application number: **84307471.7**

(22) Date of filing: **30.10.84**

(51) Int. Cl.⁴: **A 01 B 15/18**

(30) Priority: **08.11.83 NZ 206199**
**31.01.84 NZ 206989**
**29.05.84 NZ 208307**
**12.07.84 GB 8417809**

(43) Date of publication of application:
**19.06.85 Bulletin 85/25**

(84) Designated Contracting States:
**AT BE DE FR GB IT LU NL SE**

(71) Applicant: **NEWPINE INVESTMENTS LIMITED**
**P.O. Box 83 Ordnance House**
**St. Helier Jersey Channel Islands(GB)**

(72) Inventor: **Henry, Newton Hugh**
**Main Road**
**Loburn, R.D. 2(NZ)**

(74) Representative: **Wilson, Nicholas Martin et al,**
**WITHERS & ROGERS 4 Dyer's Buildings Holborn**
**London EC1N 2JT(GB)**

(54) **Improved plough.**

(57) A skeith or skimmer for new or existing ploughs in which a dished blade (16) is rotatably mounted upon supporting arm (7) such that the axis of rotation (on level ground) is inclined to the horizontal and the curved plane of a circumferential surface portion of the dished blade (16) is generally vertical. The axis of rotation of the blade is preferably inclined to the horizontal forwardly of the direction of travel. A plough is fitted with a plurality of swivelling mounted skeiths or skimmers depending from the plough beam to turn a small furrow in advance of a mould board (3) forming a larger furrow.

With such skeiths or skimmers ploughs shall be used for turning of the furrow to thereby bury stubble, trash, soil and the like.

FIG. 1.

EP 0 145 222 A1

# IMPROVED PLOUGH

This invention relates to ploughing and more particularly to a skeith/skimmer for new or existing ploughs.

A skeith, disc jointer or skimmer is an attachment for a plough which cuts and turns a small furrow, usually in advance of a mould board forming a larger furrow, toward where the open furrow is produced by the mould board.

An object of the invention is to provide a skeith for a new or existing plough which improves turning of a furrow to thereby bury stubble, trash, soil and the like.

According to the first aspect of the invention there is provided a skeith comprising a dished blade rotatably mounted upon a supporting arm, the axis of rotation of the blade, in use on level ground, being inclined to the horizontal such that the curved plane of a circumferential surface portion of the dished blade is generally vertical. The circumferential edge portion is that portion of the dished blade which in use is adjacent to the leading cutting edge of the blade. This leading cutting edge will vary in use according to the depth of cut for which the dished blade is set and the curvature of the blade, and the disc will be mounted accordingly. In the preferred arrangement the axis of rotation of the dished blade is inclined to the horizontal forwardly of the direction of travel. Preferably the skeith includes mounting means for mounting the skeith upon a plough, the mounting means being adapted to allow the supporting arm to swivel laterally relative to the mounting means to alter the position of the dished blade relative to the direction of travel of the plough whereby, in use, the dished blade is self-aligning to align the leading cutting edge with the direction of travel, the leading cutting edge performing a skeith action.

The supporting arm may include means for absorbing shocks imparted to the dished blade, said shock absorbing means being disposed between a first part of the supporting arm which is connected to the mounting means, and a second part of the supporting arm which carries the dished blade.

The shock absorbing means may be rubber or like packing.

Alternatively the supporting arm may be of suitable tension material, such as spring steel, the arm being adapted at one end to support the dished blade and at its other end to connect to the mounting means to enable the spring steel arm to support the skeith upon a plough, the arrangement being such that the arm is able to move in a vertical plane relative to the mounting means to absorb shocks imparted to the dished blade.

The invention also includes a plough comprising a frame having a plurality of trailing plough beams, a mould board mounted on each plough beam, and a plurality of swivelling skeiths depending from the frame or plough beams, one in front of each mould board, each skeith including a supporting arm and a dished blade rotatably mounted upon the supporting arm, the axis of rotation of the dished blade on level ground being inclined to the horizontal such that the curved plane of a circumferential surface portion of the dished blade is generally vertical. According to another aspect of the present invention there is provided a method of ploughing including the steps of:

fitting to a plough frame a plurality of skeiths each including a dished blade rotatably mounted upon a supporting arm, positioning a skeith on the plough frame in front of each mould board with the axis of rotation of the dished blade inclined to the horizontal so that on level ground, a circumferential surface portion of the dished blade adjacent to the leading edge is generally vertical, and towing or ploughing the plough frame to produce a furrow in which the dished blade of the skeith throws stubble, trash and other material into the adjacent furrow cavity before the mould board covers same with the furrow-slice.

The present invention will now be described by way of example with reference to the accompanying drawings in which:

Figure 1 is a perspective view from above of part of the rear of a plough incorporating an example of the invention;

Figure 2 is a perspective view from above the back of part of the plough beam showing the skeith in more detail;

Figure 3 shows rear elevation of a supporting arm with part of a dished blade and which forms part of the skeith assembly according to the invention;

Figure 4 shows an opposite front elevation of the supporting arm shown in Figure 3;

Figure 5 shows a plan view of the supporting arm shown in Figures 3 and 4;

Figure 6 shows a side view in the direction of arrows $\underline{V} - \underline{V}$ of the mounting arm shown in Figures 3 to 5.,

Figure 7 is a plan view of the dished blade positioned relative to the mould board;

Figure 8 is a side elevation of the dished blade showing its position relative to the ground during use;

Figure 9 is a section on 9-9 in Figure 8; and

Figure 10 shows an alternative supporting arm which may form part of the skeith assembly according to the invention.

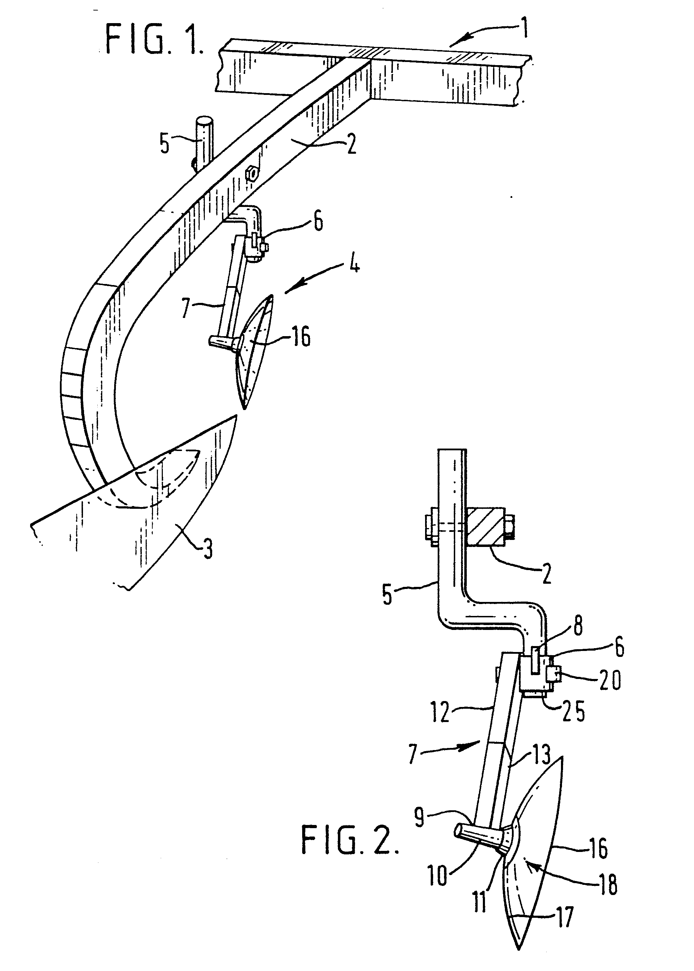

A plough incorporating the skeith according to the present invention is manufactured in a similar manner to existing plough and includes a plough frame generally indicated by arrow 1 (Figure 1) which supports a series of trailing plough beams (only one shown) 2. Each plough beam 2 has a mould board 3 at the rear thereof. The example shown and described is designed for use with a long mould board but it will be appreciated that the invention with minor modifications can be adapted to cooperate with mould boards of differing sizes and shapes or may be used alone. The plough is described in its position on level ground and it is to be appreciated that on inclined ground the references to horizontal and vertical mean parallel to the land and normal thereto respectively.

Positioned beneath the plough beam 2, intermediate the frame 1 and the mould board 3, is a skeith assembly 4 according to the present invention. The skeith assembly 4, shown in detail in Figures 2 to 6 comprises a mounting means 5 in the form of a crank arm for clamping the skeith assembly to the plough beam 2 so that the height thereof relative to the plough beam or frame 2 and the position of the skeith relative to the mould board 3 can be adjusted. The base of the mounting means 5 terminates in a mounting shaft 25 which receives a tubular sleeve 6 formed on one end of a supporting arm 7 of the skeith assembly 4. The mounting shaft 25 has a depending lug 8 formed

0145222

- 7 -

adjacent to the bottom thereof and the supporting arm 7 may pivot or swivel about the mounting shaft 25 within limits defined by engagement of the lug 8 with the supporting arm 7 and with a stop 20 on the tubular sleeve 6: other means of stopping may also be used. The provision for this lateral swivelling movement of the supporting arm 7 allows the skeith assembly 4 to move aside if obstructions or different soil conditions are encountered and provides self-alignment whereby the leading edge of the skeith assembly 4 is aligned with the direction of travel as will be explained.

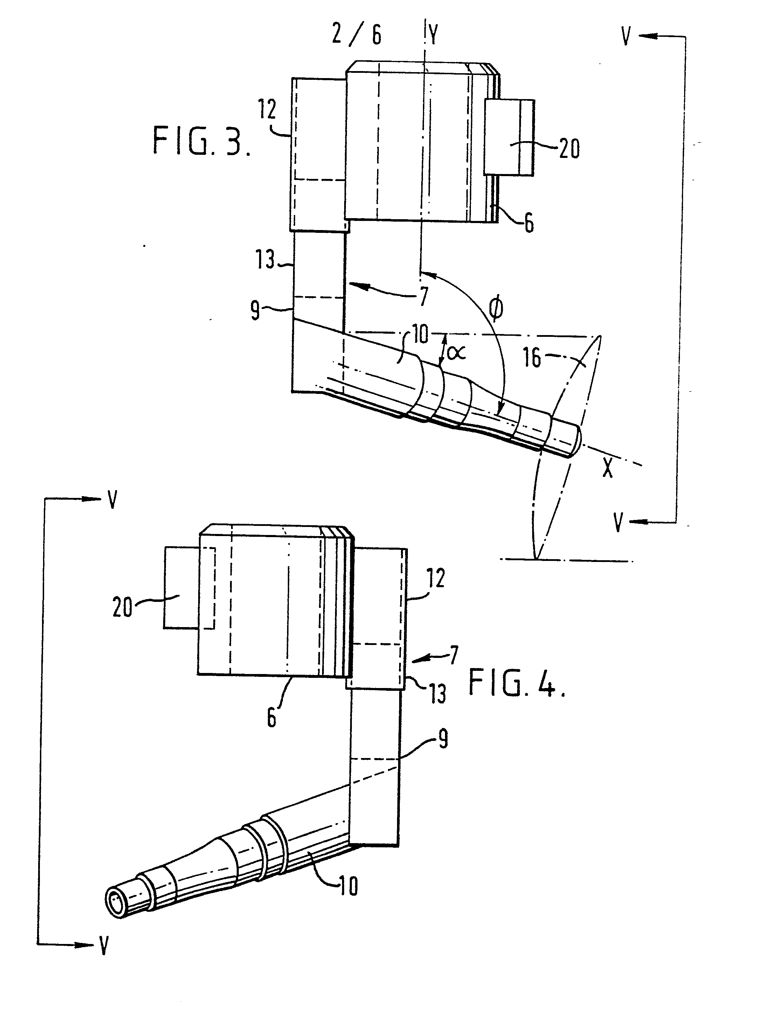

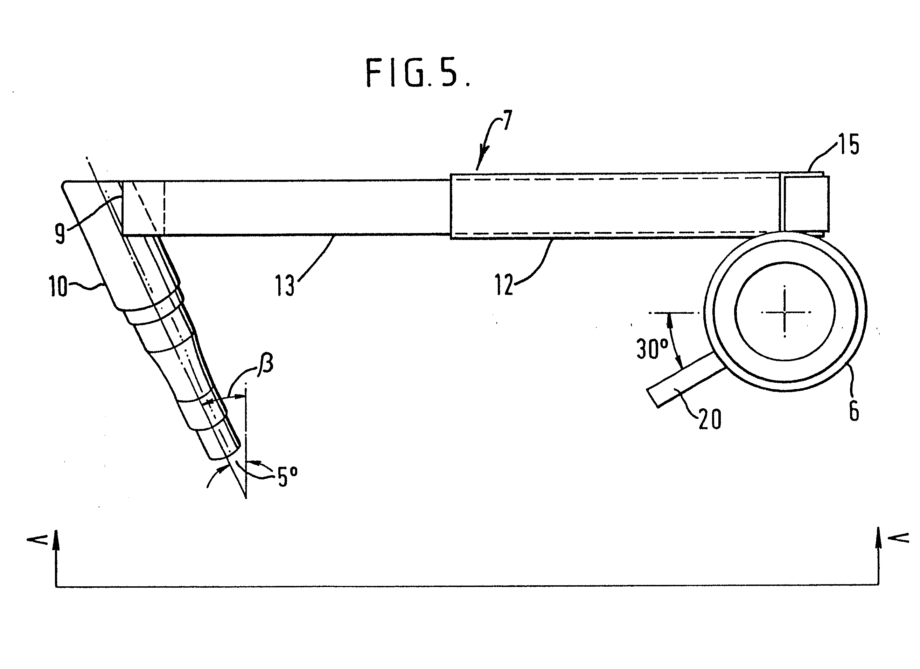

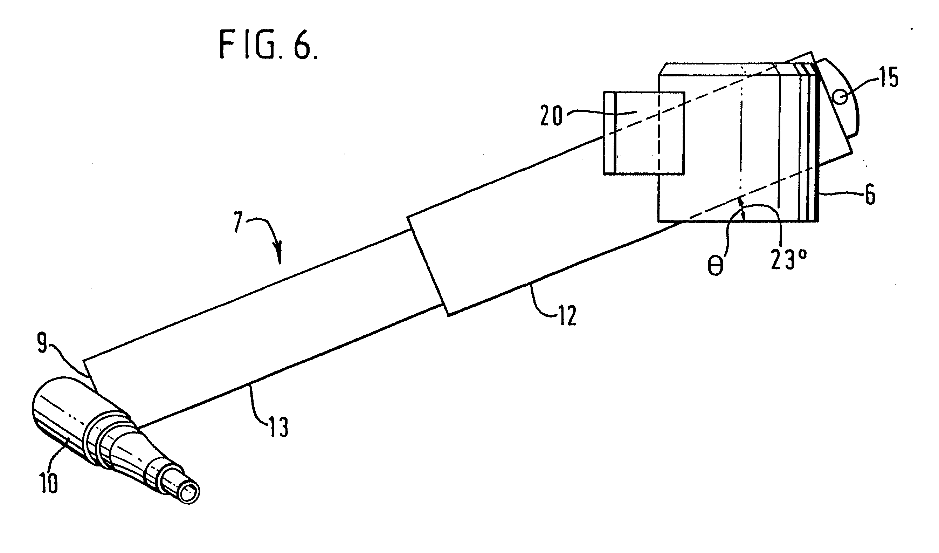

The supporting arm 7 has at its lower end 9 an axle 10 on which is supported a bearing 11. The stub axle is angled away to the side of the supporting arm 7, for example, as shown the longitudinal axis of the axle may extend away from the supporting arm 7 in the direction of normal travelling movement of the plough at an angle of about $23\pm10$ degrees to the horizontal (See angle $\alpha$ in Figure 3). In addition the axle 10 is angled forwardly of an axis extending transversely of the supporting arm 7 at an angle of for example, between 1° and 20° (in Figure 5 an angle of 5° is shown as $\beta$). The supporting arm 7 may itself suitably extend downwardly at an angle of about 23 degrees from the horizontal as illustrated as angle $\theta$ in Figure 6.

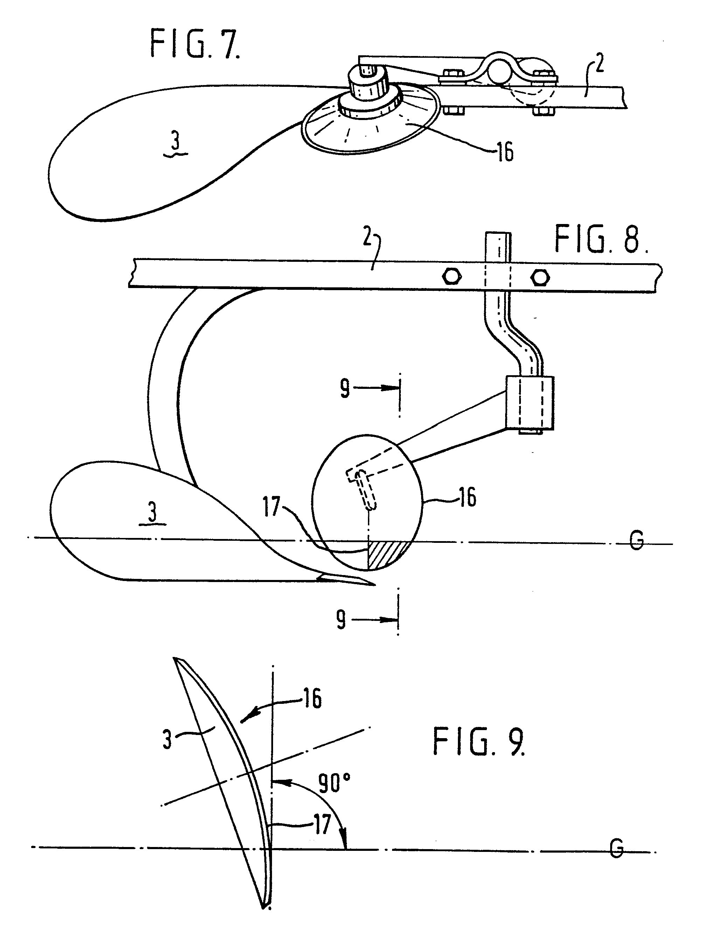

The axle 10 carries a dished blade 16 on the bearing 11 and trials have shown that an 18" blade with a curvature of 1½" to 3" when mounted on the axle angled as hereinbefore described successfully buries stubble etc when in use. The angle of downward inclination and forward inclination of the dished blade will be varied according to the curvature and diameter of the blade so that the blade runs straight and the lower part of the blade is held substantially vertically as will be explained. Moreover, in order to accommodate different curvatures the skeith assembly is adjusted at the crank mounting arm 5 to adopt the desired position of the blade in relation to the mould board. In this respect reference may be made to Figure 7 which shows the interrelationship between the leading edge of the disc and the landside of the mould board .

The supporting arm 7 may additionally include a shock absorbing facility and, for this reason, the arm 7 is formed in two parts 12 and 13, the first part 12 of which telescopically receives the second part 13. The first part 12 has the sleeve 6 which is engaged on the mounting shaft 25 by a pin or the like locking means (not shown) and the other part 13 has, at the bottom, the axle 10. The space between the first part 12 and the second part 13 is packed by natural or synthetic rubber which acts to absorb any shock imparted to the arm 7 from the blade 16. The first part 12 and second part 13 are held together by the pin 15 which passes through the protruding end of the second part 13 which abuts and the upper end of the first part 12.

The skeith assembly 4 is designed so that the dished blade 16 is held so that the axis of a plane through the face of the blade 16 is at an acute angle relative to a vertical plane. A lower part 17 of the blade 16 is therefore held so that a plane therethrough is generally vertical. Referring to Figures 8 and 9, where the dished blade 16 is shown in the ground G, the lower part 17 in question is the circumferential surface portion of the blade 16 which cuts into the ground and which is shown shaded. In addition to being set substantially vertical on level ground the actual cutting leading edge is aligned with the direction of travel so that the leading edge of the blade 16 performs a skeith action.

The skeith of the present invention may be fitted to existing plough frames or may be incorporated in new ploughs during the manufacture thereof. In use a plough incorporating the skeith of the present invention has a skeith assembly positioned in front of each mould board.

The blade 16 is set as a skeith with land and height as with respect to the shear point as seen in Figure 7.

Upon forward movement of the plough the skeith 4 rotates and the leading edge of the dished blade 16 acts to produce an initial cut of the required depth, i.e. as a skeith, while the trailing portion of the dished blade acts as a skimmer where the stubble, trash etc on the furrow-slice hits the trailing curved face of the blade at 18 and is thrown by the curvature of the blade over and out into the furrow cavity of the adjacent mould board furrow where it is covered by the turned furrow-slice produced by the following mould board 3.

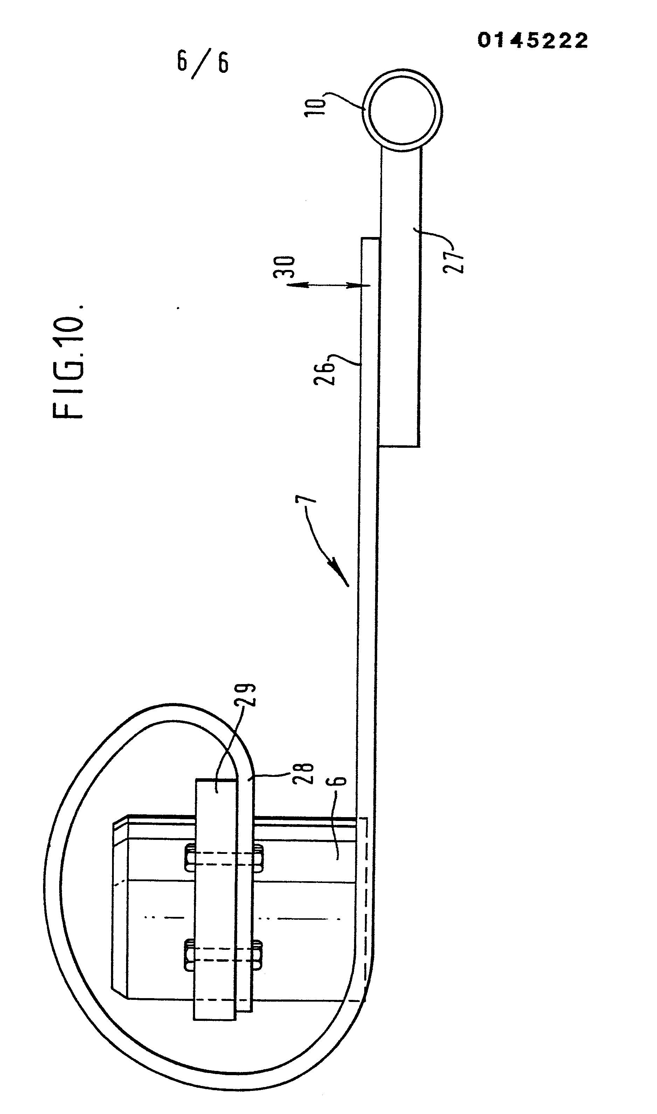

An alternative construction of supporting arm 7 is shown in Figure 10. The supporting arm is constructed from suitable tension material e.g. spring steel formed into generally the shape in the drawing which is in side elevation.

The end 26 of the arm 7 has bolted/attached thereto a member 27 to which the axle 10 is attached. The axle 10 is fixed at the preferred angle relative to the member 27 as hereinbefore described. The other end 28 of the arm 7 is bolted to a plate 29 fixed to the sleeve 6 which is mounted to a plough beam in the same manner as hereinbefore described.

In use the end 26 of the arm 7 can move in the direction of the arrows 30 to jump over any obstructions.

The applicant's experiments have shown that with the construction shown it is not absolutely necessary for the sleeve 6 to be free to pivot about the mounting means although this is desirable.

The alternative construction has mainly been found necessary with plough beams where the weight of the beam is such that there is no inherent tendency for the plough beams to jump over obstructions.

Thus by this invention there is provided a skeith for a new or existing plough which improved turning of a furrow to bury stubble, trash, soil etc. This skeith may be positioned in advance of a mould board or, if desired, the skeith of the invention may be used alone for performing surface cultivation without a mould board. In the preferred arrangement, as seen from Figure 3, the rotation axis X of the blade 16 forms an obtuse angle $\theta$ with the swivel axis Y so that the plane of the leading circumferential edge portion is substantially parallel to the swivel axis.

CLAIMS:

1. A skeith comprising a dished blade rotatably mounted upon a supporting arm, the axis of rotation of the blade in use on level ground, being inclined to the horizontal such that the curved plane of a circumferential surface portion of the dished blade is generally vertical.

2. A skeith according to claim 1 wherein the circumferential edge portion is that portion of the dished blade which in use is adjacent to the leading cutting edge of the blade.

3. A skeith according to claim 1 or 2 wherein the axis of rotation of the blade is inclined to the horizontal forwardly of the direction of travel.

4. A skeith according to claim 1, 2 or 3 including mounting means for mounting the skeith upon a plough, the mounting means, in use, being adapted to allow the supporting arm to swivel laterally relative to the mounting means to alter the position of the dished blade relative to the direction of travel of the plough.

5. A skeith according to claim 2 wherein the supporting arm includes means for absorbing shocks imparted to the dished blade, said shock absorbing means being disposed between, a first part of the supporting arm which is connected to the mounting means, and a second part of the supporting arm which carries the dished blade.

6. A skeith according to any one of the preceding claims wherein the dished blade is mounted upon a axle secured to the supporting arm.

7. A skeith comprising a dished blade, means for rotatably mounting the dished blade upon a supporting arm and defining a rotation axis, and mounting means for mounting the skeith upon a plough so as to allow the supporting arm to swivel laterally and thereby defining a swivel axis, the rotation axis of the dished blade forming an obtuse angle with the swivel axis whereby in use; the curved plane of a circumferential edge portion of the dished blade adjacent to the leading edge of the blade is substantially parallel to the swivel axis, the leading edge of the blade self-aligns with the direction of travel by movement of the skeith about the swivel axis cause the blade to perform a skeith action, and the curvature of the trailing edge portion of the dished blade provides a shimmer action.

8. A mould board plough including a mould board and skeith according to any one of claims 1 to 6 mounted on the plough in front of the mould board.

9. A plough including a skeith according to claim 4 wherein the axis of rotation of the dished blade is inclined forwardly with respect to a transverse axis of the plough.

10. A plough comprising a frame having a plurality of trailing plough beams, a mould board mounted on each plough beam, and a plurality of swivelling mounted skeiths depending from the frame or plough beams, one in front of each mould board, each including a supporting arm and a dished blade rotatably mounted upon the supporting arm, the axis of rotation of the dished blade on level ground being inclined to the horizontal such that the curved plane of a circumferential surface portion of the dished blade is generally vertical.

11. A plough according to claims 8, 9 or 10 wherein the axis of the dished blade forms an angle of between 13° and 33° with the horizontal.

12. A plough according to claim 11 wherein the angle is about 23°.

13. A plough according to claims 9, 11 and 12 wherein the axis of rotation is inclined forwardly an angle of between 1° and 20°, preferably about 5°.

0145222

- 4 -

14. A plough according to any one of claims 8 to 12 wherein the longitudinal axis of the supporting arm extends downwardly from the frame at an angle of about 23° from the horizontal.

15. A method of ploughing including the steps of:

fitting to a plough frame a plurality of mould boards, providing a plurality of skeiths each including a dished blade rotatably mounted upon a supporting arm,

positioning a skeith on the plough frame in front of each mould board with the axis of rotation of the dished blade inclined to the horizontal so that, on level ground, a circumferential surface portion of the dished blade adjacent to the leading edge is generally vertical, and,

towing the plough frame to produce a furrow in which the dished blade of the skeith throws stubble and trash etc. the adjacent furrow cavity before the mould board covers same with furrow-slice.

16. A method of ploughing according to claim 12 comprising positioning the skeiths such that their respective axes of rotation are inclined forwardly and downwardly to cause the stubble and trash etc. to hit the rear curved portions of the respective dished blades and to be thrown into the adjacent furrows.

17.   A method of ploughing according to claims 15 or 16 comprising of allowing the skeiths to swivel laterally during forward movement of the plough to vary the position of the dished blade relative to the direction of travel and thereby accommodate different soil conditions and avoid obstructions and provide self-aligning whereby the leading edges of the skeiths align themselves in the direction of travel of the plough.

FIG. 1.

FIG. 2.

0145222

FIG. 3.

2 / 6

12

20

6

13

7

9

10 α φ 16

Y

X

V V

FIG. 4.

V

20

12

6 7 13

9

10

V

# FIG.5.

# FIG. 6.

FIG. 7.

3

2

16

FIG. 8.

2

9

9

3

17

16

G

FIG. 9.

16

3

90°

17

G

FIG.10.

29

28

6

7

26

30

10

27

European Patent Office

**EUROPEAN SEARCH REPORT**

0145222
Application number

EP 84 30 7471

## DOCUMENTS CONSIDERED TO BE RELEVANT

| Category | Citation of document with indication where appropriate, of relevant passages | Relevant to claim | CLASSIFICATION OF THE APPLICATION (Int. Cl.4) |
|---|---|---|---|
| X | US-A-2 501 557 (A. WIKKERINK) <br><br> * Column 4, lines 22-44; figures * | 1-10, 15-17 | A 01 B 15/18 |
| A | | 11,14 | |
| | --- | | |
| A | US-A-1 425 451 (M. CONTI) <br> * Figure * | 5 | |
| | --- | | |
| A | FR-A-1 254 472 (A. LALIRE) <br> * Claim 2; figure 3 * | 13 | |
| | ----- | | |

|  |
|---|
| TECHNICAL FIELDS SEARCHED (Int. Cl.4) |
| A 01 B 15/00 <br> A 01 B 17/00 |

The present search report has been drawn up for all claims

| Place of search <br> BERLIN | Date of completion of the search <br> 30-01-1985 | Examiner <br> WUNDERLICH J E |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82